# EUROPEAN PATENT APPLICATION

(11) **EP 1 672 465 A1**
(43) Date of publication of application: **21.06.2006**
(21) Application number: 04029877.0
(22) Date of filing: 16.12.2004
(51) Int. Cl.: G06F 1/26, G06F 1/32, G06F 3/023

(54) **Method of power on/off management for electronic device**

(71) Applicant: TOPSEED TECHNOLOGY CORP., Chung Ho City, Taipei Hsien, Taiwan 235 (TW)
(72) Inventor: Chen, Shoei-Lai, Chung Ho City Taipei Hsien Taiwan 235 (TW)
(74) Representative: Urner, Peter

(57) **Abstract**

A method manages power on/off procedure of an electronic device with security mechanism. A user input setting is established to perform power on/off procedure and to provide security mechanism for the electronic device. The electronic device in first-time use is powered on to a stand-by state with a default power on procedure and then in user input setting state. The input unit of the electronic device is operated to set the user input setting, which can be provided by input element or the composition of input elements of the input unit. The electronic device can be successfully powered on or off by operating the already-set user input setting.

## Description

### BACKGROUND OF THE INVENTION

### 1. Field of the Invention

The present invention relates to a method of power on/off management for electronic device, and more particularly to a method of power on/off management using user input setting corresponding to the power on/off procedure, thus providing a low cost security mechanism and power control mechanism for electronic device.

### 2. Description of Prior Art

The consumer electronic devices such as mobile phone, smart phone, portable computer, remote controller, and personal digital assistance (PDA) **become more and more popular as the they have more versatile function** and larger storage capacity, Moreover the management for powering on/off the electronic devices is also an issue for product development.

The conventional management way for powering on/off the electronic devices is to provide a power button on the electronic device and the electronic device can be further provided with password protection mechanism. After one user turns on the electronic device with the power button, a password window may appear to request password entry. The electronic device can be successfully powered on only after a correct password is input. The conventional electronic devices encounter problem of erroneously powering on/off when the power button is touched by mistake. It is even harder to protect an electronic device without power controlling button.

Moreover, other security mechanism for personal identification such as fingerprint identification, voice identification or retina identification has been proposed to provide better authentication to the electronic devices. However, the cost and the size of the electronic devices will be inevitably increased.

### SUMMARY OF THE INVENTION

The present invention is intended to provide method of power on/off **management. This method uses user input setting corresponding to the power on/off procedure, thus providing a low cost security mechanism and power** control mechanism for electronic device.

Accordingly, the present invention provides a method for power on/off management of an electronic device with security mechanism. A user input setting is established to perform power on/off procedure and to provide security mechanism for the electronic device. The electronic device in first-time use is powered on to a stand by state with a default power on procedure and then in user input setting state. The input unit of the electronic device is operated to set the user input setting, which can be provided by input element or the composition of input elements of the input unit. The electronic device can be successfully powered on or off by operating the already-set user input setting.

The above summaries are intended to illustrate exemplary embodiments of the invention, which will be best understood in conjunction with the detailed description to follow, and are not intended to limit the scope of the appended claims.

### BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
**Fig. 1 shows a flowchart of the method for powering on/off management** according to a preferred embodiment of the present invention.
Fig. 2 shows a schematic diagram of the input unit according to a preferred embodiment of the present invention.
Fig. 3 shows a schematic diagram of the input unit according to another preferred embodiment of the present invention.
Fig. 4 shows another embodiment of the input unit according to still another preferred embodiment of the present invention.
Fig. 5 shows another embodiment of the input unit according to still another preferred embodiment of the present invention.

### DETAILED DESCRIPTION OF THE INVENTION

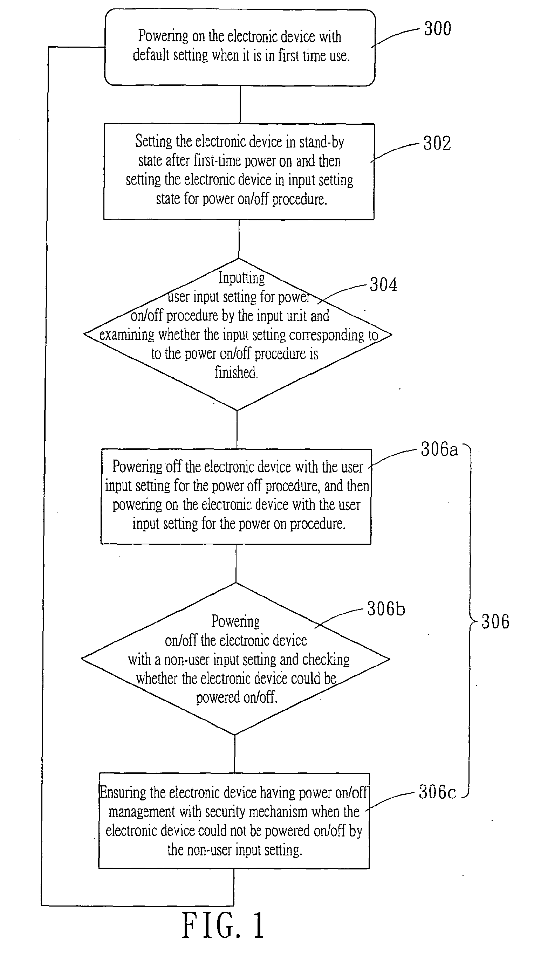

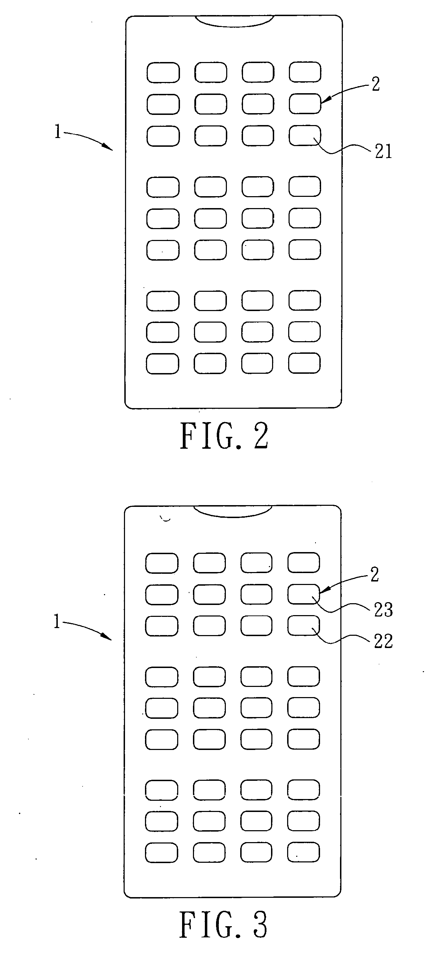

Fig. 1 shows a flowchart of the method for powering on/off management in the electronic devices according to one preferred embodiment of the present invention. The electronic device 1 in the shown embodiment can be one of mobile phone, smart phone, portable computer, remote controller, and PDA. The electronic device 1 has an input unit 2 arranged on one side thereof and having a plurality of input elements 21 as shown in Fig. 2. The input elements 21 are used for power on/off control, instruction input and data entry function.

**With reference now to Fig. 1, the method of powering on/off management** for the electronic devices with security mechanism comprises following steps:
Step 300: The electronic device is powered on with default setting provided by manufacture when it is in first time use. The input setting for this power on procedure is performed by the input unit 2.
Step 302: The electronic device is in stand-by state after first-time power on. Afterward, the electronic device is in input setting state for power on/off procedure.
**Step 304: The user input setting for power on/off procedure is input** by the input unit 2. The step further examines whether the input setting corresponding to the power on/off procedure is finished.
Step 306: The input setting for power on/off procedure is validated by powering on/off again the electronic device.

The security validation step 306 comprises sub-steps as following.

After the user input setting for the power on/off procedure is finished by steps 300-304 stated above, following actions are taken to validate the user input setting. The user input setting for power-off procedure of the electronic device 1 is performed to power off the electronic device 1. Afterward, the input unit 2 is operated to perform the user input setting for power-on procedure of the electronic device 1 in sub-step 306a. Therefore, the effectiveness and **operability of the user input setting for power on/off procedure can be validated.**

**Afterward, a non-user input setting (this means it is a wrong and not** allowable input setting) is operated by using the input unit 2 and the electronic device 1 is subjected again to power on/off procedure. The sub-step 306b judges whether the electronic device cannot be powered on/off by the non-user input setting. If this is true, it means the electronic device 1 is correctly set for preventing the non-user input setting. Afterward, the user input setting is performed again to power on/off the electronic device 1. The user input setting can be ensured if the electronic device 1 is successfully powered on and off. Therefore, in sub-step 306c, the electronic device 1 can be ensured to have power on/off management with security mechanism. The non-user input setting will not successfully power on/off the electronic device 1.

In a preferred embodiment, the user input settings for power on procedure and power off procedure are the same.

In another preferred embodiment, the user input settings for power on procedure and power off procedure are different.

The above-mentioned user input setting for power on and power off procedure can be further explained with the embodiment shown in Fig. 2. The composition of the input elements 21 can be used for user input setting. One **of the input elements 21 can be chosen for user input setting. Alternatively,** at least two of the input elements 21, with their combination, can be chosen for use input setting. As shown in Fig. 3, the input elements 22 and 23 are chosen for user input setting. More particularly, the input elements 22 and 23 can be simultaneously or sequentially input for constituting different user input setting of power on and power off procedure.

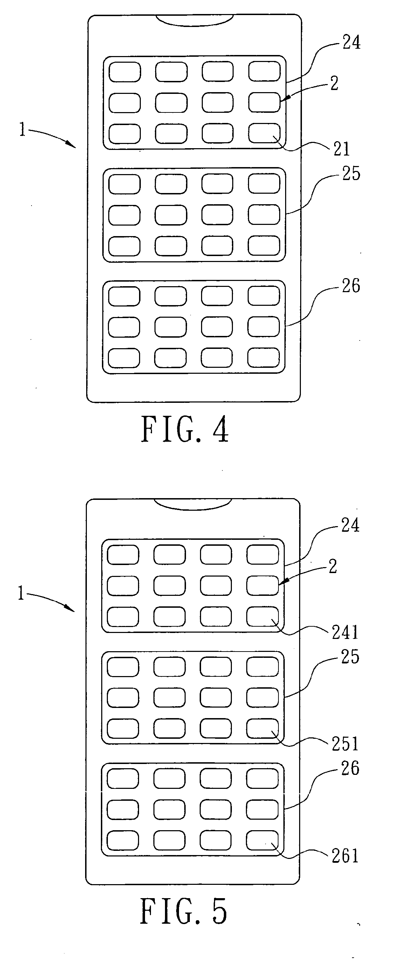

Fig. 4 shows another embodiment of the input unit for the power on and power off procedure according to the present invention. The input elements 21 of the input unit 2 are divided into multiple partition groups 24, 25, and 26. Therefore, the user can selectively set one of the partition groups 24, 25, and 26 as user input setting. The way of user input setting is similar to that shown in Fig. 2. Moreover, the user can also select at least two out of the multiple partition groups 24, 25, and 26 and then select at least one input element 241, 251, 261 from each of the partition groups 24, 25, and 26 as input composition. The input composition can be used for the user input setting of power on/off procedure with security mechanism.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. **A method for power on/off management of an electronic device (1)** with an input unit (2) on one face thereof, the input unit having a plurality of input elements (21), the method comprising steps of:
using the input unit (2) for performing a default power on procedure when the electronic device (1) is in first-time use;
**setting electronic device (1) to input setting state for power on/off procedure after the electronic device (1) entering stand-by state;**
**setting a user input setting for power on/off procedure of the electronic device (1) by the input unit (2); and**
**validating the user input setting to ensure the electronic device (1)** have power on/off procedure with security mechanism.

2. **The method for power on/off management as in claim 1, wherein the step of the validating the user input setting comprises following sub-steps:**
powering off the electronic device (1) with the user input setting for power off procedure and then powering on the electronic device (1) with the user input setting for power on procedure;
performing a power on procedure or power off procedure with a non-user input setting input by the input unit (2);
judging the electronic device (1) to have power on/off procedure with security mechanism if the electronic device (1) cannot be powered on/off by the non-user input setting.

3. The method for power on/off management as in claim 1, wherein the step of the validating the input setting comprises following sub-steps:
powering off the electronic device (1) with the user input setting for power off procedure and then powering on the electronic device (1) with the user input setting for power on procedure;
**performing a power on procedure or a power off procedure with a non-user** input setting input by the input unit (2);
performing power on procedure with the user input setting input by the input unit (2);
**judging the electronic device (1) to have power on/off procedure with** security mechanism if the electronic device (1) cannot be powered on/off by the non-user input setting and can be powered on/off by the user input setting.

4. The method for power on/off management as in claim 1, wherein the user input settings for the power on procedure and power off procedure are the same input setting.

5. The method for power on/off management as in claim 1, wherein the user input settings is performed by selecting at least one from the input elements (21) and by a composition of the selected at least one input elements (21).

6. **The method for power on/off management as in claim 5, wherein the user** input setting is performed by simultaneously or sequentially operating the selected at least one input elements.

7. The method for power on/off management as in claim 1, further comprising:
dividing the plurality of input elements (21) into multiple partition groups (24, 25, 26), each of the partition groups (24, 25, 26) containing a plurality of input elements;
setting the user input setting for the power on/off procedure.

8. The method for power on/off management as in claim 7, further comprising:
selecting at least one or two input elements (241, 251, 261) from one partition group (24, 25, 26);
using a composition of the selected input elements (241, 251, 261) as the user input setting.

9. **The method for power on/off management as in claim 7, further comprising:**
**selecting at least one or two input elements (241, 25.1, 261) from at lest two** partition groups (24, 25, 26);
using a composition of the selected input elements (241, 251, 261) as the user input setting.

10. **The method for power on/off management as in claim 1, wherein the** electronic device (1) is one of mobile phone, smart phone, portable computer, remote controller, and personal digital assistance (PDA).

## Amended claims

### Amended claims in accordance with Rule 86(2) EPC.

**1.** A method for power on/off management of a portable electronic device (1) having an input unit (2) on one face thereof, the input unit having a plurality of input elements (21) for operating the device, the method comprising the steps of:
- a user performs a default power on procedure, when the electronic device (1) is in first-time use by using the input unit (2);
- setting the device (1) to an input setting state for setting a power on procedure and a off procedure after the electronic device (1) has entered a stand by state. in which the input unit (2) is able to receive input commands:
- a user sets a user input setting for power on/off procedure of the electronic device (1) by the input unit (2);
**characterized by**
- a user validates the user input setting to ensure the electronic device (1) have power on/off procedure with security mechanism by powering off the electronic device (1) with the set user input setting for power off procedure and then powering on the electronic device (1) with the set user input setting for power on procedure:
performing a power on procedure or a power off procedure with a non-user input setting input by the input unit (2):
performing power on procedure with the user input setting input by the input unit (2) ;
ensuring the electronic device (1) to have power on/off procedure with security mechanism if the electronic device (1) cannot be powered on/off by the non-user input setting and can be powered on/off by the user input setting.

**2.** The method for power on/off management as in claim 1, wherein the user input settings for the power on procedure and power off procedure are the same input setting.

**3.** The method for power on/off management as in claim 1, wherein the user input settings is performed by selecting at least one from the input elements (21) and by a composition of the selected at least one input elements (21).

**4.** The method for power on/off management as in claim 3, wherein the user input setting is performed by simultaneously or sequentially operating the selected at least one input elements.

**5.** The method for power on/off management as in claim 1, further comprising:
dividing the plurality of input elements (21) into multiple partition groups (24, 25, 26), each of the partition groups (24, 25, 26) containing a plurality of input elements;
setting the user input setting for the power on/off procedure.

**6.** The method for power on/off management as in claim 5, further comprising:
selecting at least one or two input elements (241, 251, 261) from one partition group (24,25,26);
using a composition of the selected input elements (241, 251, 261) as the user input setting.

**7.** The method for power on/off management as in claim 5, further comprising:
selecting at least one or two input elements (241, 251, 261) from at lest two partition groups (24,25,26);
using a composition of the selected input elements (241, 251, 261) as the user input setting.

**8.** The method for power on/off management as in claim 1, wherein the electronic device (1) is one of mobile phone, smart phone, portable computer, remote controller, and personal digital assistance (PDA).
